# EUROPÄISCHE PATENTSCHRIFT

(11) **EP 2 016 314 B1**
(45) Veröffentlichungstag und Bekanntmachung des Hinweises auf die Patenterteilung: **03.04.2013**
(21) Anmeldenummer: 07703373.6
(22) Anmeldetag: 09.02.2007
(51) Int. Cl.: F16K 11/07, F16K 15/14, F16J 15/32

(54) **FLUIDTECHNISCHES GERÄT**
FLUIDIC DEVICE
APPAREIL DE TECHNIQUE DES FLUIDES

(30) Priorität: 06.04.2006 DE 102006016197
(43) Veröffentlichungstag der Anmeldung: 21.01.2009
(73) Patentinhaber: FESTO AG & Co. KG, 73734 Esslingen (DE)
(72) Erfinder: MAGISTER, Rainer, 73230 Kirchheim (DE); SCHLETH, Andreas, 73734 Esslingen (DE)
(74) Vertreter: Abel, Martin
(86) Internationale Anmeldenummer: PCT/EP2007/001099
(87) Internationale Veröffentlichungsnummer: WO 2007/118536

(56) Entgegenhaltungen:
- EP-A2- 1 069 353
- DE-U1- 20 318 192
- US-A- 4 813 343
- US-A- 5 865 442
- US-B1- 6 957 605

## Beschreibung

Die Erfindung betrifft ein fluidtechnisches Gerät, insbesondere Ventil oder Arbeitszylinder, mit einem unter Belassung eines Ringspaltes von einem Außenteil umschlossenen Innenteil, auf dem in koaxialer Anordnung mindestens ein einen im Wesentlichen U-förmigen Querschnitt aufweisender, den Ringspalt überbrückender Dichtungsring sitzt, der einen an dem Innenteil fixierten Halteabschnitt und eine sich ausgehend von dem Halteabschnitt nach außen und zugleich nach vorne erstreckende, dichtend an dem Außenteil anliegende ringförmige Dichtlippe aufweist, wobei der Dichtungsring mit seinem Halteabschnitt in einer ringförmigen Kontaktzone vollflächig an dem Innenteil anliegt, die sich aus einer am Innenumfang des Halteabschnittes angeordneten zylindrischen Basiszone und einer an der Rückseite des Halteabschnittes angeordneten, sich ausgehend vom rückwärtigen Endbereich der Basiszone nach außen erstreckenden und der rückseitigen Abstützung des Halteabschnittes dienenden Abstützzone zusammensetzt, wobei der Dichtungsring in der Kontaktzone vollflächig stoffschlüssig mit dem Innenteil fest verbunden ist und die Abstützzone mindestens einen sich schräg nach außen und zugleich rückwärts erstreckenden Schrägabschnitt aufweist.

Ein beispielsweise aus der DE 20318192 U1 oder der DE 19932982 C2 bekanntes fluidtechnisches Gerät ist als Drosselrückschlagventil ausgebildet und enthält einen an einem Innenteil fixierten, als Rückschlagventilglied fungierenden Dichtungsring, der mit einer schräg nach vorne und gleichzeitig nach radial außen ragenden ringförmigen Dichtlippe an einem das Innenteil umschließenden Außenteil dichtend anliegt. Wird der im Querschnitt im Wesentlichen U-förmige Dichtungsring von vorne her durch ein fluidisches Druckmedium angeströmt, wird die Dichtlippe verstärkt gegen das Außenteil gepresst und eine fluiddichte Abdichtung erzielt. Bei einer Fluidanströmung von der Rückseite her kann sich die Dichtlippe nach innen biegen und einen Strömungsweg freigeben.

Aus der DE 29704264 U1 geht ein als fluidbetätigter Arbeitszylinder konzipiertes fluidtechnisches Gerät hervor, bei dem ein an einem von einem Kolben gebildeten Innenteil angeordneter Dichtungsring mit einer Dichtlippe dynamisch dichtend an einem vom Zylindergehäuse gebildeten Außenteil anliegt. Auch hier ist eine Dichtwirkung bei einem von der Vorderseite her anströmenden Druckmedium gewährleistet.

Bei allen geschilderten Bauformen ist der Dichtungsring mit einem Halteabschnitt in eine Ringnut des Innenteils eingeschnappt, wobei sein Halteabschnitt in einer Kontaktzone vollflächig an dem Innenteil anliegt. Die Kontaktzone umfasst eine dem Innenumfang des Halteabschnittes zugeordnete Basiszone und eine rückseitig am Halteabschnitt angeordnete Abstützzone. Im Bereich der Abstützzone wird der Dichtungsring gegen die von der Vorderseite her wirkenden Fluidkräfte axial abgestützt. Gleichwohl besteht die Gefahr, dass - vor allem mit zunehmender Betriebsdauer - eine Rissbildung in dem in der Regel aus Elastomermaterial bestehenden Dichtungsring auftritt, was zu Funktionsbeeinträchtigungen oder zu einem kompletten Versagen des Dichtungsringes führen kann.

Aus der US-A-5865442 ist ein Gerät der eingangs genannten Art bekannt, bei dem der Dichtungsring an die Basiszone und an die Abslütztone anvulkanisiert ist.

Es ist die Aufgabe der vorliegenden Erfindung, Maßnahmen vorzuschlagen, die bei einem fluidtechnischen Gerät der eingangs genannten Art eine lange Lebensdauer des verwendeten Dichtungsringes gewährleisten.

Zur Lösung dieser Aufgabe liegt die Basiszone im Nutgrund einer den Halteabschnitt zumindest teilweise aufnehmenden Ringnut des Innenteils, wobei die Ringnut eine dem Halteabschnitt vorne vorgelagerte Nutfläche aufweist, mit der der Halteabschnitt ebenfalls stoffschlüssig fest verbunden ist.

Durch die in der Kontaktzone vorhandene stoffschlüssige Verbindung zwischen dem Dichtungsring und dem Innenteil können die bei Fluidbeaufschlagung auftretenden Verformungen des Dichtungsringes reduziert werden. Es wird verhindert, dass der Halteabschnitt in der Kontaktzone vom Innenteil abhebt. Dadurch ergibt sich insgesamt ein erhöhter Verformungswiderstand. In Verbindung damit wird durch den zumindest partiell schrägen Verlauf der rückseitigen Abstützzone erreicht, dass vor allem im Übergangsbereich zur Dichtlippe eine geringere Beanspruchung als beim Stand der Technik auftritt, die zudem relativ gleichmäßig verteilt ist, sodass die Tendenz zur Rissbildung reduziert ist und eine relativ lange Lebensdauer des Dichtungsringes gewährleistet werden kann.

Ein weiter verbesserter Halt wird erzielt, da der Halteabschnitt in eine Ringnut des Innenteils eingesetzt ist und auch zwischen der vorderen Nutflanke der Ringnut und der vorderen Stirnfläche des Halteabschnittes eine stoffschlüssige Verbindung vorliegt, sodass die mit einer festen Verbindung aufwartende Köntaktzone erweitert ist.

Vorteilhafte Weiterbildungen der Erfindung gehen aus den Unteransprüchen hervor.

Als besonders vorteilhaft hat es sich erwiesen, die gesamte rückseitige Abstützzone als Schrägabschnitt auszubilden, der vorzugsweise durchweg über eine konstante Neigung verfügt.

Gleichwohl kann die Abstützzone auch über einen oder mehrere, jeweils in einer Radialebene verlaufende Radialabschnitte verfügen, wobei durch aufeinander abgestimmte Verteilung von Schrägabschnitten und Radialabschnitten eine optimale Abstimmung vorgenommen werden kann.

Die rückseitige Abstützzone kann einen sich unmittelbar an die Basiszone anschließenden Schrägabschnitt aufweisen, der entweder mit konstanter Steigung bis zum äußeren Ende der Abstützzone durchgehen kann, an den sich aber auch ein weiterer Schrägabschnitt mit veränderter Neigung anschließen kann oder auch ein Radialabschnitt.

Es ist auch eine Gestaltung möglich, bei der sich an die Basiszone unmittelbar ein Radialabschnitt der rückseitigen Abstützzone anschließt. Dieser geht an seinem äußeren Endbereich in einen Schrägabschnitt über, der dann wiederum bis zum äußeren Ende der Abstützzone durchgehen kann oder an den sich ein weiterer Schrägabschnitt mit abweichender Neigung oder ein weiterer Radialabschnitt anschließt.

Die Abstützzone kann auch mehrere Schrägabschnitte aufweisen, die durch Radialabschnitte voneinander abgesetzt sind, wobei sie untereinander die gleiche Steigung oder auch unterschiedliche Steigungen aufweisen können.

Als besonders vorteilhaft hat es sich erwiesen, den zwischen einem Schrägabschnitt und einer durch den äußeren Endabschnitt des Schrägabschnittes hindurch verlaufenden Radialebene gemessenen Neigungswinkel so zu wählen, dass er zwischen 15° und 75° liegt. Besonders vorteilhaft ist hierbei ein aus einem Winkelbereich zwischen 35° und 55° ausgesuchter Neigungswinkel, insbesondere 45°.

Die stoffschlüssige Verbindung zwischen dem Dichtungsring und dem Innenteil im Bereich der Kontaktzone kann eine Klebeverbindung sein. Eine besonders kostengünstige Herstellung verspricht allerdings eine Bauform, bei der der Dichtungsring in der Kontaktzone durch Spritzgießen an das Innenteil angeformt ist und dadurch eine innige stoffschlüssige Verbindung erreicht wird.

Als Material für den Dichtungsring empfiehlt sich ein Kunststoffmaterial mit gummielastischen Eigenschaften, insbesondere sogenanntes NBR (Nitrile Butadiene Rubber).

Das den Dichtungsring tragende Innenteil kann aus Metall oder aus Kunststoffmaterial oder aus einem Verbundmaterial bestehen.

Nachfolgend wird die Erfindung anhand der beiliegenden Zeichnung näher erläutert. In dieser zeigen:
- Figur 1: einen Ausschnitt eines von einem Ventil gebildeten fluidtechnischen Gerätes im Bereich eines Dichtungsringes, wobei es sich um eine bezüglich der strichpunktiert dargestellten Mittellinie bevorzugt rotationssymmetrische Anordnung handelt,
- Figur 2: ein weiteres Ausführungsbeispiel eines als Ventil ausgebildeten fluidtechnischen Gerätes mit einer modifizierten Gestaltung der Kontaktzone zwischen Dichtungsring und Innenteil und
- Figur 3: anhand eines als Arbeitszylinder ausgebildeten fluidtechnischen Gerätes eine neuerlich modifizierte Gestaltung der Kontaktzone zwischen Dichtungsring und Innenteil.

Die insgesamt mit Bezugsziffer 1 bezeichneten fluidtechnischen Geräte enthalten jeweils unter anderem ein in der Regel rotationssymmetrisches Innenteil 2, das unter Belassung eines Ringspaltes 3 insbesondere koaxial von einem Außenteil 4 umschlossen ist.

Das Innenteil 2 trägt im Bereich seines Außenumfanges mindestens einen koaxial angeordneten Dichtungsring 5. Dieser ist in der Lage, eine durch einen Pfeil angedeutete axiale Fluidströmung 6 durch den Ringspalt 3 hindurch zu verhindern.

Der Dichtungsring 5 besitzt einen seine Innenkontur definierenden ringförmigen Halteabschnitt 7, der das Innenteil 2 umgreift und mit dem er an dem Innenteil 2 fest fixiert ist. Ausgehend von einem rückwärtigen Bereich des Halteabschnittes 7 ragt eine ebenfalls ringförmige Dichtlippe 8 in Richtung zur Vorderseite 12 des Dichtungsringes 5 und dabei gleichzeitig nach radial außen, sodass sich in der Regel ein schräger Verlauf einstellt. Die Dichtlippe 8 hat, insbesondere im Bereich ihres dem Halteabschnitt 7 entgegengesetzten freien Endes, einen umlaufenden Abdichtabschnitt 14, mit dem sie an der den Ringspalt 3 umfangsseitig begrenzenden Mantelfläche 15 des Außenteils 4 in Dichtkontakt steht. Insgesamt besitzt der Dichtungsring 5 somit einen im Wesentlichen U-förmigen Querschnitt, wobei hier ein Schnitt durch den Ringkörper des Dichtungsringes 5 an einer beliebigen Stelle des Ringumfanges gemeint ist, mit einer durch die Längsachse 16 des Innenteils 2 und einer hierzu rechtwinkeligen Radialachse aufgespannten Schnittebene. Die U-Öffnung weist nach vorne. Betrachtet man den kompletten Dichtungsring 5, ist die U-Öffnung von einer zur Vorderseite 12 hin offenen, zur Längsachse 16 konzentrischen Ringnut gebildet.

Das fluidtechnische Gerät 1 ist ein Schieberventil. Das Innenteil 2 repräsentiert einen in Richtung der Längsachse 16 verstellbaren Ventilschieber, wobei der von ihm getragene Dichtungsring 5 in an sich bekannter Weise stellungsabhängig entweder mit der Mantelfläche 15 in Dichtkontakt steht oder in einem nicht von der Mantelfläche 15 umgrenzten Bereich platziert ist. Auf diese Weise wird die Fluidströmung 6 entweder unterbunden oder freigegeben.

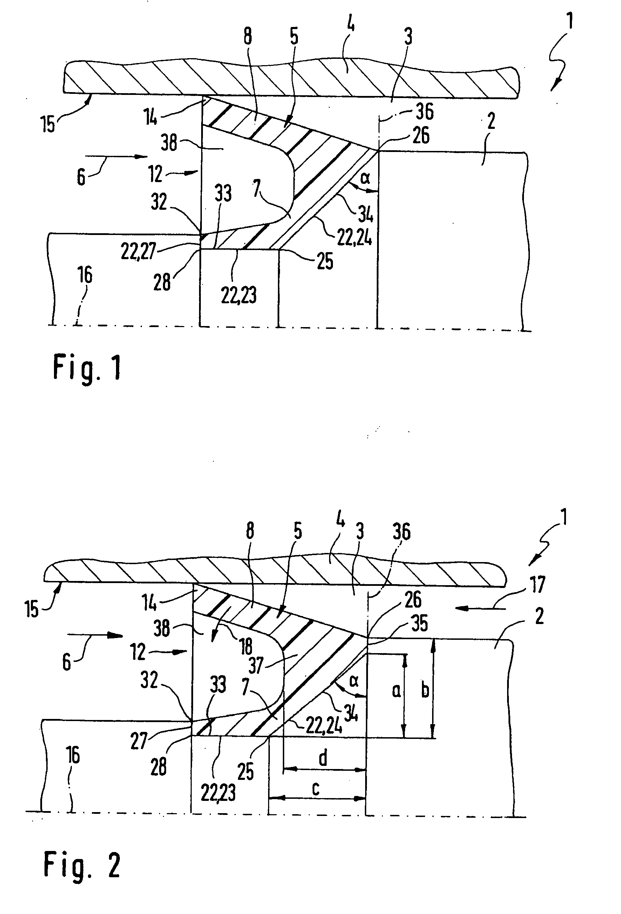

Bei dem Ausführungsbeispiel der Figur 2 ist das fluidtechnische Gerät 1 ein Rückschlagventil. Innenteil 2 und Außenteil 4 sind dabei entweder ortsfest zueinander angeordnet oder in Richtung der Längsachse 16 relativ zueinander bewegbar. Der Dichtungsring 5 fungiert als Rückschlagventilglied, indem er eine ihn von der Vorderseite 12 her anströmende Fluidströmung 6 am Hindurchtreten durch den Ringspalt 3 hindert, eine ihn in entgegengesetzter Richtung rückseitig anströmende Fluidströmung 17 jedoch durchlässt. Letzteres beruht darauf, dass die Dichtlippe 8 bei rückseitiger Anströmung gemäß Pfeil 18 nach radial innen umbiegbar ist, sodass ihr Abdichtabschnitt 14 von der Mantelfläche 15 abhebt.

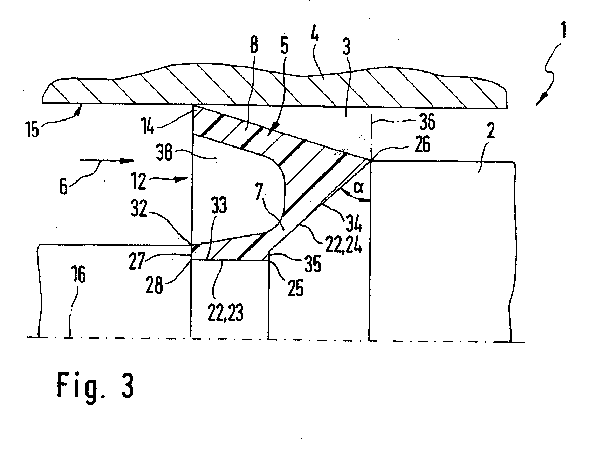

Im Falle der Figur 3 ist das fluidtechnische Gerät 1 ein durch Fluidkraft betätigbarer Arbeitszylinder. Das Innenteil 2 bildet einen relativ zum Außenteil 4 in Richtung der Längsachse 16 verschiebbaren Kolben, bei dessen Bewegung der Dichtungsring 5 mit dem Abdichtabschnitt 14 an der Mantelfläche 15 des vom Zylindergehäuse gebildeten Außenteils 4 entlanggleitet.

Die im Folgenden anhand der verschiedenen Anwendungen beschriebenen unterschiedlichen erfindungsgemäßen Ausgestaltungen sind nicht auf die beschriebenen Anwendungen beschränkt, sondern sind in Verbindung mit beliebigen fluidtechnischen Geräten nutzbar.

Allen Ausführungsbeispielen ist gemeinsam, dass der Halteabschnitt 7 in einer ringförmigen Kontaktzone 22 an dem Innenteil 2 anliegt und dabei in dieser Kontaktzone 22 vollflächig stoffschlüssig mit dem Innenteil 2 fest verbunden ist. Auf diese Weise ergibt sich ein fester, bevorzugt unlösbarer Zusammenhalt zwischen dem Dichtungsring 5 und dem Innenteil 2, was die bei Fluidbeaufschlagung auftretenden Verformungen des bevorzugt insgesamt aus Material mit gummielastischen Eigenschaften bestehenden Dichtungsringes 5 einschränkt.

Die Stoffschlussverbindung kann beispielsweise eine Klebeverbindung sein. Vorgezogen wird allerdings eine Verbindung durch unmittelbares Anspritzen des Dichtungsringes 5 an das Innenteil 2 im Rahmen eines Spritzgießverfahrens. Der Dichtungsring 5 wird durch Spritzgießen hergestellt und dabei unmittelbar an das Innenteil 2 fest und unlösbar angeformt.

Die Kontaktzone 22 setzt sich aus mehreren, sich aneinander anschließenden Einzelzonen zusammen. Eine dieser Einzelzonen, die sich am Innenumfang des Halteabschnittes 7 befindet, hat eine zylindrische und insbesondere kreiszylindrische Gestalt und sei im Folgenden als Basiszone 23 bezeichnet. An deren rückwärtigen Endbereich 25 schließt sich als weitere Einzelzone eine sich nach radial außen erstreckende Abstützzone 24 an, die der rückseitigen Abstützung des Halteabschnittes 7 dient. Der rückwärtige Endbereich 25 der Basiszone 23 fällt mit dem inneren Endbereich der Abstützzone 24 zusammen. Deren äußerer Endbereich 26 liegt im Bereich des Außenumfanges 4 des Innenteils 2 und ist mit größerem Radialabstand zur Längsachse 16 angeordnet als ihr innerer Endbereich 25.

Vorzugsweise umfasst die Kontaktzone 22 noch eine vordere Einzelzone 27, die sich an den vorderen Endbereich 28 der Basiszone 23 anschließt und sich ausgehend von dort in einer Radialebene bis zum Außenumfang des Innenteils 2 erstreckt. Der hierbei definierte äußere Endbereich 32 der vorderen Einzelzone 27 liegt radial näher zur Längsachse 16 als der äußere Endbereich 26 der Abstützzone 24. Das Innenteil 2 hat in dem sich nach vorne an den Halteabschnitt 7 anschließenden Längenabschnitt einen geringeren Außendurchmesser als in dem sich rückseitig an den Halteabschnitt 7 anschließenden Längenabschnitt.

Die vordere Einzelzone 27 befindet sich zweckmäßigerweise an der vorderen Nutflanke einer in das Innenteil 2 umfangsseitig eingebrachten Ringnut 33, die den Halteabschnitt 7 teilweise aufnimmt und deren Nutgrund die Basiszone 23 bildet.

Auf diese Weise ist der Halteabschnitt 7 auf einander axial entgegengesetzten Seiten von Bestandteilen der Kontaktzone 22 flankiert, was eine besonders sichere Befestigung am Innenteil 2 zur Folge hat. Grundsätzlich wäre es jedoch auch möglich, auf die Ringnut 33 zu verzichten, sodass die vordere Einzelzone 27 entfällt und der Halteabschnitt 7 an seiner vorderen Stirnfläche freiliegt.

Vor allem in Verbindung mit der stoffschlüssigen Verbindung ist die besondere Ausgestaltung der Abstützzone 24 von Vorteil, die sich darin äußert, dass die Abstützzone 24 mindestens einen sich schräg nach außen und zugleich nach rückwärts erstreckenden Schrägabschnitt 34 beinhaltet.

Der Schrägabschnitt kann, im Querschnitt gesehen, eine gekrümmte Kontur haben. Vorzugsweise ist er jedoch geradlinig konturiert, sodass er, wie bei den Ausführungsbeispielen, insgesamt konisch gestaltet ist.

Bei den Ausführungsbeispielen der Figuren 1 und 2 enthält die rückseitig am Halteabschnitt 7 angeordnete Abstützzone 24 einen einzigen Schrägabschnitt 34, der sich an dem Endbereich 25 unmittelbar an die Basiszone 23 anschließt.

Im Falle der Figur 1 ist die Abstützzone 24 in ihrer Gesamtheit von dem Schrägabschnitt 34 gebildet, der sich ununterbrochen zwischen dem inneren Endbereich 25 und dem äußeren Endbereich 26 erstreckt.

Im Falle der Figur 2 hingegen enthält die Abstützzone 24 zusätzlich zu dem Schrägabschnitt 34 einen sich bezüglich der Längsachse 16 des Dichtungsringes 5 exakt radial erstreckenden Radialabschnitt. Er verläuft in einer zu der Längsachse 16 rechtwinkeligen Radialebene und bildet beim Ausführungsbeispiel der Figur 2 den äußeren Endabschnitt der Abstützzone 24. Mit anderen Worten endet die rückseitige Abstützzone 24 außen mit einem sich an den Schrägabschnitt 34 anschließenden Radialabschnitt 35.

Auch bei dem Ausführungsbeispiel der Figur 3 setzt sich die Abstützzone 24 wie im Falle der Figur 2 ausschließlich aus einem einzigen Schrägabschnitt 34 und einem einzigen Radialabschnitt 35 zusammen. Im Gegensatz zur Figur 2 bildet hier jedoch der Radialabschnitt 35 den sich rückseitig unmittelbar an die Basiszone 23 anschließenden inneren Endabschnitt der Abstützzone 24. Außen hingegen läuft die Abstützzone 24 mit dem Schrägabschnitt 34 aus.

Abweichend von den abgebildeten Gestaltungsformen könnte ein Schrägabschnitt 34 auch sowohl innen als auch außen von je einem Radialabschnitt 35 flankiert sein.

Weitere Kombinationen eines oder mehrerer Schrägabschnitte 34 mit einem oder mehreren Radialabschnitten 35 sind ebenfalls denkbar. Sofern mehrere Schrägabschnitte 34 vorhanden sind, können diese über unterschiedliche Steigungen verfügen, was im Übrigen auch für Ausführungsbeispiele gilt, bei denen die Abstützzone 24 keinen Radialabschnitt 35 aufweist und sich nur aus mehreren Schrägabschnitten 34 zusammensetzt.

Die einzelnen Abschnitte 34, 35 gehen zweckmäßigerweise über eine zur Längsachse 6 konzentrische Kante ineinander über. Abgerundete Übergänge wären jedoch ebenfalls möglich.

Beim Ausführungsbeispiel verfügen die Schrägabschnitte 34. durchweg über eine konstante Neigung. Berechnungen haben ergeben, dass damit voraussichtlich die besten Haltbarkeitsergebnisse erzielbar sind.

Als bevorzugter Neigungswinkel α für den Schrägabschnitt 34 - gemessen zwischen dem Schrägabschnitt 34 und einer durch den äußeren Endbereich des betroffenen Schrägabschnittes 34 verlaufenden Radialebene 36 - wird ein Winkel angesehen, der im Bereich zwischen 15° und 75° und dabei vorzugsweise zwischen 35° und 55° liegt. In den meisten Fällen kann mit einem Neigungswinkel α von 45° das beste Ergebnis erzielt werden.

Setzt sich die Abstützzone 24 aus einem sich an die Basiszone 23 anschließenden Schrägabschnitt 34 und einem darauffolgenden Radialabschnitt 25 zusammen, empfiehlt sich die Einhaltung der nachfolgenden Abmessungsverhältnisse.

Ist der zwischen dem Schrägabschnitt 34 und der den Radialabschnitt 35 enthaltenden Radialebene 36 gemessene Neigungswinkel α kleiner oder gleich 45°, sollte die in radialer Richtung, also rechtwinkelig zur Längsachse 16 gemessene, von dem Schrägabschnitt 34 eingenommene Teilhöhe "a" der Abstützzone 24 dem 0,3-Fachen der Gesamthöhe "b" der Abstützzone 24 entsprechen oder größer sein. Ist der vorgenannte Neigungswinkel α größer oder gleich 45°, sollte die in Richtung der Längsachse 16 des Dichtungsringes 5 gemessene, von dem Schrägabschnitt 34 eingenommene Länge "c" dem 0,3-Fachen der im Wurzelbereich 37 des U-Querschnittes in der Richtung der Längsachse 16 gemessenen Dicke "d" des Dichtungsringes 5 entsprechen oder größer als diese Dicke "d" sein. Die Dicke "d" misst sich zwischen dem Grund der zur Vorderseite 12 hin offenen Ringnut 38 und dem Radialabschnitt 35.

In der Kontaktzone 22 liegen der Halteabschnitt 7 und das Innenteil 2 mit zueinander komplementären, die Kontaktzone 22 definierenden Außenflächen aneinander an. In dieser Grenzschicht liegt eine stoffschlüssige Verbindung zwischen den beiden Komponenten vor.

## Patentansprüche

1. Fluidtechnisches Gerät, insbesondere Ventil oder Arbeitszylinder, mit einem unter Belassung eines Ringspaltes (3) von einem Außenteil umschlossenen Innenteil (2), auf dem in koaxialer Anordnung mindestens ein einen im Wesentlichen U-förmigen Querschnitt aufweisender, den Ringspalt (3) überbrückender Dichtungsring (5) sitzt, der einen an dem Innenteil (2) fixierten Halteabschnitt (7) und eine sich ausgehend von dem Halteabschnitt (7) nach außen und zugleich nach vorne erstreckende, dichtend an dem Außenteil (4) anliegende ringförmige Dichtlippe (8) aufweist, wobei der Dichtungsring (5) mit seinem Halteabschnitt (7) in einer ringförmigen Kontaktzone (22) vollflächig an dem Innenteil (2) anliegt, die sich aus einer am Innenumfang des Halteabschnittes (7) angeordneten zylindrischen Basiszone (23) und einer an der Rückseite des Halteabschnittes (8) angeordneten, sich ausgehend vom rückwärtigen Endbereich (25) der Basiszone (23) nach außen erstreckenden und der rückseitigen Abstützung des Halteabschnittes (7) dienenden Abstützzone (24) zusammensetzt, wobei der Dichtungsring (5) in der Kontaktzone (22) vollflächig stoffschlüssig mit dem Innenteil (2) fest verbunden ist und die Abstützzone (24) mindestens einen sich schräg nach außen und zugleich rückwärts erstreckenden Schrägabschnitt (34) aufweist, **dadurch gekennzeichnet, dass** die Basiszone (23) im Nutgrund einer den Halteabschnitt (7) zumindest teilweise aufnehmenden Ringnut (33) des Innenteils (2) liegt, wobei die Ringnut (33) eine dem Halteabschnitt (7) vorne vorgelagerte vordere Nutflanke aufweist, mit der der Halteabschnitt (7) ebenfalls stoffschlüssig fest verbunden ist.

2. Fluidtechnisches Gerät nach Anspruch 1, **dadurch gekennzeichnet, dass** der mindestens eine Schrägabschnitt (34) der rückseitigen Abstützzone (24) durchweg eine konstante Neigung aufweist.

3. Fluidtechnisches Gerät nach Anspruch 1 oder 2, **dadurch gekennzeichnet, dass** die rückseitige Abstützzone (24) mindestens einen sich unmittelbar an die Basiszone (23) anschließenden Schrägabschnitt (34) aufweist.

4. Fluidtechnisches Gerät nach einem der Ansprüche 1 bis 3, **dadurch gekennzeichnet, dass** die rückseitige Abstützzone (24) außen mit einem Schrägabschnitt (34) endet.

5. Fluidtechnisches Gerät nach einem der Ansprüche 1 bis 4, **dadurch gekennzeichnet, dass** die rückseitige Abstützzone (24) in ihrer Gesamtheit als Schrägabschnitt (34) ausgebildet ist.

6. Fluidtechnisches Gerät nach einem der Ansprüche 1 bis 4, **dadurch gekennzeichnet, dass** die Abstützzone (24) mindestens einen sich bezüglich der Längsachse (16) des Dichtungsringes (5) radial erstreckenden Radialabschnitt (35) aufweist, an den sich an einem oder an beiden Enden ein Schrägabschnitt (34) anschließt.

7. Fluidtechnisches Gerät nach Anspruch 6, **dadurch gekennzeichnet, dass** sich ein Radialabschnitt (35) der rückseitigen Abstützzone (24) unmittelbar an die Basiszone (23) anschließt und an seinem äußeren Endbereich in einen Schrägabschnitt (34) übergeht.

8. Fluidtechnisches Gerät nach Anspruch 7, **dadurch gekennzeichnet, dass** die Abstützzone (24) ausschließlich von einem inneren Radialabschnitt (35) und mindestens einem sich daran anschließenden, bis nach außen durchgehenden Schrägabschnitt (34) gebildet ist.

9. Fluidtechnisches Gerät nach Anspruch 6 oder 7, **dadurch gekennzeichnet, dass** die rückseitige Abstützzone (24) außen mit einem sich an einen Schrägabschnitt (34) anschließenden Radialabschnitt (35) endet.

10. Fluidtechnisches Gerät nach Anspruch 9 in Verbindung mit Anspruch 6, **dadurch gekennzeichnet, dass** die rückseitige Abstützzone (24) ausschließlich von einem äußeren Radialabschnitt (35) und mindestens einem sich daran anschließenden, bis zur Basiszone (23) durchgehenden Schrägabschnitt (34) gebildet ist.

11. Fluidtechnisches Gerät nach Anspruch 10, **dadurch gekennzeichnet, dass** bei einem zwischen der den Radialabschnitt (35) enthaltenden Radialebene (36) und dem Schrägabschnitt (34) eingeschlossenen Neigungswinkel (α) von kleiner oder gleich 45° die in radialer Richtung gemessene, von dem Schrägabschnitt (34) eingenommene Teilhöhe (a) der Abstützzone (24) größer oder gleich dem 0,3-Fachen der Gesamthöhe (b) der Abstützzone (24) ist.

12. Fluidtechnisches Gerät nach Anspruch 10, **dadurch gekennzeichnet, dass** bei einem zwischen der den Radialabschnitt (35) enthaltenden Radialebene (36) und dem Schrägabschnitt (34) eingeschlossenen Neigungswinkel (α) von größer oder gleich 45° die in Richtung der Längsachse (16) des Dichtungsringes (5) gemessene, von dem Schrägabschnitt (34) eingenommene Länge (c) des Dichtungsringes (5) größer oder gleich dem 0,3-Fachen der im Wurzelbereich (37) des U-Querschnittes in Richtung der Längsachse (16) des Dichtungsringes (5) gemessenen Dicke (d) des Dichtungsringes (5) ist.

13. Fluidtechnisches Gerät nach einem der Ansprüche 1 bis 12, **dadurch gekennzeichnet, dass** der zwischen einer durch den äußeren Endbereich eines Schrägabschnittes (34) verlaufenden Radialebene (36) des Dichtungsringes (5) und dem betreffenden Schrägabschnitt (34) gemessene Neigungswinkel (α) im Bereich zwischen 15° und 75° liegt, wobei er vorzugsweise 35° bis 55° und hierbei insbesondere 45° beträgt.

14. Fluidtechnisches Gerät nach einem der Ansprüche 1 bis 13, **dadurch gekennzeichnet, dass** der Dichtungsring (5) zum Erhalt der stoffschlüssigen Verbindung in der Kontaktzone (22) an das Innenteil (2) angeklebt ist.

15. Fluidtechnisches Gerät nach einem der Ansprüche 1 bis 13, **dadurch gekennzeichnet, dass** der Dichtungsring (5) zum Erhalt der stoffschlüssigen Verbindung in der Kontaktzone (22) durch Spritzgießen an das Innenteil (2) angeformt ist.

16. Fluidtechnisches Gerät nach einem der Ansprüche 1 bis 15, **dadurch gekennzeichnet, dass** der Dichtungsring (5) ein Rückschlagventilglied bildet.

17. Fluidtechnisches Gerät nach einem der Ansprüche 1 bis 16, **dadurch gekennzeichnet, dass** der Dichtungsring (5) aus Material mit gummielastischen Eigenschaften besteht.

## Claims

1. Fluid power device, in particular valve or working cylinder, with an inner part (2) encompassed by an outer part while leaving an annular gap (3) and on which rests in a coaxial arrangement at least one seal ring (5) with a substantially U-shaped cross-section and bridging the annular gap (3) and having a holding section (7) fixed to the inner part (2) and, extending outwards from the holding section (7) and at the same time forwards, an annular seal lip (8) fitting tightly to the outer part (4), wherein the seal ring (5) with its holding section (7) is in contact with the inner part (2) in an annular contact zone (22) over the whole area thereof, which contact zone is comprised of a cylindrical base zone (23) located on the inner periphery of the holding section (7) and a support zone (24) provided on the rear of the holding section (8), extending outwards from the rear end section (25) of the base zone (23) and serving to support the holding section (7) at the rear, wherein the seal ring (5) has a firm material bonding with the inner part (2) over the whole area of the contact zone (22) and the support zone (24) has at least one inclined section (34) extending outwards at an angle and at the same time towards the rear, **characterised in that** the base zone (23) lies in the slot base of an annular slot (33) of the inner part (2) at least partly accommodating the holding section (7), wherein the annular slot (33) has a front slot side located ahead of the holding section (7), with which the holding section (7) is similarly firmly material-bonded.

2. Fluid power device according to claim 1, **characterised in that** the inclined section or sections (34) of the rear support zone (24) has or have a constant inclination throughout.

3. Fluid power device according to claim 1 or 2, **characterised in that** the rear support zone (24) has at least one inclined section (34) directly adjoining the base zone (23).

4. Fluid power device according to any of claims 1 to 3, **characterised in that** the support zone (24) ends on the outside with an inclined section (34).

5. Fluid power device according to any of claims 1 to 4, **characterised in that** the support zone (24) is in the form of an inclined section (34) in its entirety.

6. Fluid power device according to any of claims 1 to 4, **characterised in that** the support zone (24) has at least one radial section (35) extending radially relative to the longitudinal axis (16) of the seal ring (5) and with an adjoining inclined section (34) at one or both ends.

7. Fluid power device according to claim 6, **characterised in that** a radial section (35) of the rear support zone (24) directly adjoins the base zone (23) and merges into an inclined section (34) at its outer end section.

8. Fluid power device according to claim 7, **characterised in that** the support zone (24) is formed solely by an inner radial section (35) and at least one inclined section (34) adjoining the former and continuous to the outside.

9. Fluid power device according to claim 6 or 7, **characterised in that** the rear support zone (24) ends on the outside with a radial section (35) adjoining an inclined section (34).

10. Fluid power device according to claim 9 in combination with claim 6, **characterised in that** the rear support zone (24) is formed solely by an outer radial section (35) and at least one adjoining inclined section (34), continuous to the base zone (23).

11. Fluid power device according to claim 10 **characterised in that**, in the case of an angle of inclination (α) of less than or equal to 45° between the radial plane (36) containing the radial section (35) and the inclined section (34), the partial height (a) of the support zone (24) assumed by the inclined section (34), measured in the radial direction, is greater than or equal to 0.3 times the overall height (b) of the support zone (24).

12. Fluid power device according to claim 10 **characterised in that**, in the case of an angle of inclination (α) of less than or equal to 45° between the radial plane (36) containing the radial section (35) and the inclined section (34), the length of the seal ring (5) assumed by the inclined section (34), measured in the direction of the longitudinal axis (16) of the seal ring (5) is greater than or equal to 0.3 times the thickness of the seal ring (5) measured in the root area (37) of the U-shaped cross-section in the direction of the longitudinal axis (16) of the seal ring (5).

13. Fluid power device according to any of claims 1 to 12, **characterised in that** angle of inclination (α) measured between a radial plane (36) of the seal ring (5) running between the outer end section of an inclined section (34) and the relevant inclined section (34) lies in the range between 15° and 75°, preferably between 35° and 55° and in this connection in particular amounting to 45°.

14. Fluid power device according to any of claims 1 to 13, **characterised in that** the seal ring (5) is stuck on to the inner part (2) to obtain the material bonding in the contact zone (22).

15. Fluid power device according to any of claims 1 to 13, **characterised in that** the seal ring (5) is moulded on to the inner part (2) by injection moulding to obtain the material bonding in the contact zone (22).

16. Fluid power device according to any of claims 1 to 15, **characterised in that** the seal ring (5) forms a non-return valve member.

17. Fluid power device according to any of claims 1 to 16, **characterised in that** the seal ring (5) is made of material with rubber-elastic properties.

## Revendications

1. Appareil de technique des fluides, en particulier soupape ou vérin de travail, comprenant une partie intérieure (2) entourée par une partie extérieure en laissant une fente annulaire (3), sur laquelle partie intérieure repose au moins une bague d'étanchéité (5) dans un agencement coaxial présentant une section transversale essentiellement en forme de U, surmontant la fente annulaire (3), laquelle bague d'étanchéité présente une section de retenue (7) fixée au niveau de la partie intérieure (2) et une lèvre d'étanchéité (8) de forme annulaire s'étendant vers l'extérieur et simultanément vers l'avant en partant de la section de retenue (7) et reposant au niveau de la partie extérieure (4) de manière à assurer l'étanchéité, sachant que la bague d'étanchéité (5) repose par sa section de retenue (7) sur toute sa surface au niveau de la partie intérieure (2) dans une zone de contact (22) annulaire, laquelle zone de contact se compose d'une zone de base (23) cylindrique disposée sur la périphérie intérieure de la section de retenue (7) et d'une zone d'appui (24) disposée au niveau du côté arrière de la section de retenue (8), s'étendant depuis la zone d'extrémité (25) arrière de la zone de base (23) vers l'extérieur et servant à l'appui côté arrière de la section de retenue (7), sachant que la bague d'étanchéité (5) est reliée de manière solide à la partie intérieure (2) par liaison de matière sur toute la surface dans la zone de contact (22), et sachant que la zone d'appui (24) présente au moins une section oblique (34) s'étendant de manière oblique vers l'extérieur et en même temps vers l'arrière, **caractérisé en ce que** la zone de base (23) se trouve dans le fond de rainure d'une rainure annulaire (33) de la partie intérieure (2), laquelle rainure annulaire accueille au moins en partie la section de retenue (7), sachant que la rainure annulaire (33) présente un flanc de rainure avant logé à l'avant en amont de la section de retenue (7), auquel est reliée de manière solide également par liaison de matière la section de retenue (7).

2. Appareil de technique des fluides selon la revendication 1, **caractérisé en ce que** la section oblique (34) au moins au nombre de une de la zone d'appui (24) arrière présente sur toute sa longueur une inclinaison constante.

3. Appareil de technique des fluides selon la revendication 1 ou 2, **caractérisé en ce que** la zone d'appui (24) arrière présente au moins une section oblique (34) se raccordant directement à la zone de base (23).

4. Appareil de technique des fluides selon l'une quelconque des revendications 1 à 3, **caractérisé en ce que** la zone d'appui (24) arrière se termine côté extérieur par une section oblique (34).

5. Appareil de technique des fluides selon l'une quelconque des revendications 1 à 4, **caractérisé en ce que** la zone d'appui (24) arrière est réalisée dans sa globalité sous la forme d'une section oblique (34).

6. Appareil de technique des fluides selon l'une quelconque des revendications 1 à 4, **caractérisé en ce que** la zone d'appui (24) présente au moins une section radiale (35) s'étendant radialement par rapport à l'axe longitudinal (16) de la bague d'étanchéité (5), au niveau de laquelle section radiale se raccorde par une ou deux extrémités une section oblique (34).

7. Appareil de technique des fluides selon la revendication 6, **caractérisé en ce qu'**une section radiale (35) de la zone d'appui (24) arrière se raccorde directement à la zone de base (23) et se transforme en une section oblique (34) au niveau de sa zone d'extrémité extérieure.

8. Appareil de technique des fluides selon la revendication 7, **caractérisé en ce que** la zone d'appui (24) est formée exclusivement par une section radiale (35) intérieure et par au moins une section oblique (34) s'y raccordant et continue jusqu'à l'extérieur.

9. Appareil de technique des fluides selon la revendication 6 ou 7, **caractérisé en ce que** la zone d'appui (24) arrière se termine côté extérieur par une section radiale (35) se raccordant à une section oblique (34).

10. Appareil de technique des fluides selon la revendication 9 en lien avec la revendication 6, **caractérisé en ce que** la zone d'appui (24) arrière est formée exclusivement par une section radiale (35) extérieure et au moins par une section oblique (34) s'y raccordant et continue jusqu'à la zone de base (23).

11. Appareil de technique des fluides selon la revendication 10, **caractérisé en ce que** pour un angle d'inclinaison (α) formé par le plan radial (36) contenant la section radiale (35) et la section oblique (34), inférieur ou égal à 45°, la hauteur partielle (a) de la zone d'appui (24), mesurée dans la direction radiale, prise par la section oblique (34), est plus grande ou égale à 0,3 fois la hauteur totale (b) de la zone d'appui (24).

12. Appareil de technique des fluides selon la revendication 10, **caractérisé en ce que** pour un angle d'inclinaison (α) formé par le plan radial (36) contenant la section radiale (35) et la section oblique (34), supérieur ou égal à 45°, la longueur (c) de la bague d'étanchéité (5), mesurée dans la direction de l'axe longitudinal (16) de la bague d'étanchéité (5), prise par la section oblique (34), est plus grande ou égale à 0,3 fois l'épaisseur (d) de la bague d'étanchéité (5), laquelle épaisseur est mesurée dans la zone de racine (37) de la section transversale en U en direction de l'axe longitudinal (16) de la bague d'étanchéité (5).

13. Appareil de technique des fluides selon l'une quelconque des revendications 1 à 12, **caractérisé en ce que** l'angle d'inclinaison (α) mesuré entre un plan radial (36) de la bague d'étanchéité (5), s'étendant à travers la zone d'extrémité extérieure d'une section oblique (34) et la section oblique (34) concernée se situe dans la plage comprise entre 15° et 75°, sachant que ledit angle est compris de préférence entre 35° et 55°, et dans le cas présent est en particulier de 45°.

14. Appareil de technique des fluides selon l'une quelconque des revendications 1 à 13, **caractérisé en ce que** la bague d'étanchéité (5) est collée à la partie intérieure (2) pour obtenir l'assemblage par liaison de matière dans la zone de contact (22).

15. Appareil de technique des fluides selon l'une quelconque des revendications 1 à 13, **caractérisé en ce que** la bague d'étanchéité (5) est formée au niveau de la partie intérieure (2) par moulage par injection aux fins de l'obtention de l'assemblage par liaison de matière dans la zone de contact (22).

16. Appareil de technique des fluides selon l'une quelconque des revendications 1 à 15, **caractérisé en ce que** la bague d'étanchéité (5) forme un organe de soupape anti-retour.

17. Appareil de technique des fluides selon l'une quelconque des revendications 1 à 16, **caractérisé en ce que** la bague d'étanchéité (5) est constituée d'un matériau présentant des propriétés élastiques.
